# EUROPEAN PATENT APPLICATION

(11) **EP 2 541 245 A1**
(43) Date of publication of application: **02.01.2013**
(21) Application number: 10846653.3
(22) Date of filing: 24.12.2010
(51) Int. Cl.: G01N 30/60, G01N 30/88, G01N 37/00

(54) **COLUMN FOR CHROMATOGRAPHY, METHOD FOR PRODUCING SAME, AND ANALYSIS DEVICE**

(30) Priority: 25.02.2010 JP 2010040077
(71) Applicant: Tokyo Electron Limited, Tokyo 107-6325 (JP); Shinwa Chemical Industries, Ltd., Kyoto-Shi Kyoto-fu 612-8307 (JP)
(72) Inventor: HONG, Seokhyoung, Nirasaki City Yamanashi 407-0192 (JP); KIYOMOTO, Tomofumi, Takatsuki-shi Osaka 569-1029 (JP); KOBAYASHI, Hiroshi, Kyoto-shi Kyoto 612-8307 (JP)
(74) Representative: HOFFMANN EITLE
(86) International application number: PCT/JP2010/073369
(87) International publication number: WO 2011/104990

(57) **Abstract**

A column for chromatography includes a flow path for allowing a mobile phase, the flow path including mutually-opposing sidewalls and a bottom wall joined to the sidewalls and arranged at bottom ends of the sidewalls; and a plurality of pillars provided to extend along the sidewalls from the bottom wall and regularly arranged at a specified interval. The column is configured to separate individual components from a mixture sample containing multiple kinds of components by using the pillars as a stationary phase. Each of the pillars includes a curved outer surface and the sidewalls partially include a curved surface conforming to the outer surface of each of the pillars. The shortest distance between each of the sidewalls and a pillar positioned closest to said each of the sidewalls is equal to the shortest distance between the pillars in a flow direction of the mobile phase.

## Description

### Field of the Invention

The present invention relates to a column for chromatography (hereinafter, simply referred to as "column"), a method for producing same and a analysis device. More particularly, the present invention pertains to a column for chromatography including a plurality of pillars as a stationary phase provided within a flow path thereof, a method for producing same, and an analysis device provided with the column for chromatography.

### Background of the Invention

In recent years, there is available a column for chromatography used in separating individual components of a mixture sample moved by a mobile phase. In this column for chromatography, instead of particles of specified diameter filled in a tubular column as a stationary phase, a myriad of pillars is provided within a flow path of the column. The pillars are used as a stationary phase. That is to say, the column includes a flow path for allowing a mobile phase to flow therethrough, the flow path having a pair of sidewalls arranged in an opposing relationship with each other and a bottom wall joined to the sidewalls and arranged at the bottom ends of the sidewalls, and a plurality of pillars provided to extend along the sidewalls from the bottom wall and regularly arranged at a specified interval. A mixture sample is introduced from one end of the flow path using the mobile phase. When the mixture sample is moved toward the downstream side, individual components are separated from the mixture sample using the moving velocity difference between the respective components passing between the pillars. This column for chromatography is often called a chemical separation chip. Depending on the components of the mixture sample or the kind of a mobile phase used, chemical modification is appropriately applied to the surfaces of the pillars.

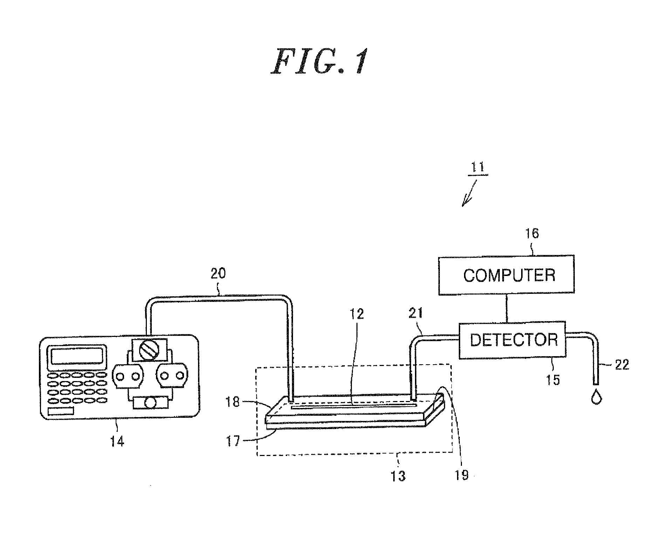

A technology pertaining to this column for chromatography is disclosed in Analytical Chemistry, Vol. 76, No. 15, August 1, 2004 (Fig. 1(b) and Fig. 1(c)).

Now, consideration is given to the moving state of the individual components of the mixture sample within the flow path of the column. The individual components of the mixture sample moving through the flow path flow with some diffusion in the moving direction within the flow path. In this moving state, it is desirable that the width of the same component in the moving direction be kept as small as possible in order to enhance the resolution. In other words, it is required that, in the moving direction within the flow path, the moving velocity of the same component moving in the central region be equal, if possible, to the moving velocity of the same component moving in the peripheral regions, i.e., the regions close to the sidewalls.

In the Analytical Chemistry, Vol. 76, No. 15, August 1, 2004 (Fig. 1(b) and Fig. 1(c)), there are disclosed a column having such a sidewall shape that the portion in which pillars are arranged protrudes in a substantially semicircular shape with respect to the sidewalls extending straightforward along the flow direction and a column having sidewalls extending straightforward along the flow direction. In the columns of this shape, however, the difference between the moving velocity in the central region and the moving velocity in the peripheral regions is too large to provide a large enough resolution. Presumably, this is due to the influence of flow path diffusion or molecular diffusion generated during separation of the mixture sample in the sidewall shape disclosed in the above-cited reference.

### Summary of the Invention

It is an object of the present invention to provide a column for chromatography capable of greatly enhancing the resolution.

Another object of the present invention is to provide a method for producing a column for chromatography capable of accurately and efficiently producing a column for chromatography with greatly enhanced resolution.

A further object of the present invention is to provide an analysis device capable of enjoying increased analysis accuracy.

In accordance with one aspect of the present invention, there is provided a column for chromatography, including:
a flow path for allowing a mobile phase to flow therethrough, the flow path having a pair of mutually-opposing sidewalls and a bottom wall joined to the sidewalls and arranged at bottom ends of the sidewalls; and a plurality of pillars provided to extend along the sidewalls from the bottom wall and regularly arranged at a specified interval, wherein the column is configured to separate individual components from a mixture sample containing multiple kinds of components by using the pillars as a stationary phase, the mixture sample being moved by the mobile phase, each of the pillars includes a curved outer surface, the sidewalls partially including a curved surface conforming to the outer surface of each of the pillars, and the shortest distance between each of the sidewalls and a pillar positioned closest to said each of the sidewalls is equal to the shortest distance between the pillars in a flow direction of the mobile phase.

With this configuration, the interval between the pillars adjoining each other in the central region of the flow path is set equal to the interval between the pillars and the sidewalls in the region of the flow path close to the sidewall. In the moving direction of the mobile phase flowing through the flow path, it is possible to reduce the difference between the moving velocity in the central region and the moving velocity in the peripheral regions close to the sidewalls. That is to say, it is possible to reduce the difference between the moving velocities in the respective regions. In this case, the outer surface of each of the pillars includes a curved surface and each of the sidewalls partially includes a curved surface conforming to the outer surface of each of the pillars. This makes it possible to keep the flow of the mobile phase smooth in the regions close to the sidewall. Accordingly, the column for chromatography of this configuration is capable of reducing the influence of flow path diffusion when separating the individual components from the mixture sample and is capable of increasing the resolution.

Preferably, the pillars may be a cylindrical shape, the pillars having center coordinates arranged in a closest packing structure in a cross section orthogonal to an extension direction of the pillars, each of the sidewalls being formed into such a shape that, in the cross section, concave and convex sections are repeatedly arranged along the flow direction of the mobile phase, each of the concave and convex sections being defined by a line including a portion of a contour line of an imaginary circle, which is drawn about a center of a first pillar positioned closest to each of the sidewalls so as to make contact with a contour line of a second pillar adjoining the first pillar, and a portion of a contour line of an imaginary pillar, which has a diameter equal to a diameter of the pillars and which is positioned so as to form a regular triangle when the center of the imaginary pillar and the centers of the first and second pillars are connected to one another.

With this configuration, the sidewall can be continuously formed of an arc-shaped line in the cross section. This makes it possible to efficiently restrain the mobile phase from staying in the peripheral regions and to assure smooth movement of the mobile phase within the flow path.

Preferably, the pillars may have an elliptical shape in a cross section taken along a plane orthogonal to an extension direction of the pillars, the pillars having center coordinates arranged in a closest packing structure, each of the sidewalls being formed into such a shape that, in the cross section, concave and convex sections are repeatedly arranged along the flow direction of the mobile phase, each of the concave and convex sections being defined by a line including a portion of a contour line of an imaginary elliptical circle, which is drawn about a center of a first pillar positioned closest to each of the sidewalls so as to make contact with a contour line of a second pillar adjoining the first pillar and so as to have a shape similar to the imaginary elliptical circle, and a portion of a contour line of an imaginary pillar, which has an arc identical with an arc of the first pillar and which is positioned so as to form an isosceles triangle when the center of the imaginary pillar and the centers of the first and second pillars are connected to one another.

In accordance with another aspect of the present invention, there is provided a method for manufacturing a column for chromatography including a flow path for allowing a mobile phase to flow therethrough, the flow path having a pair of mutually-opposing sidewalls and a bottom wall joined to the sidewalls and arranged at bottom ends of the sidewalls, and a plurality of pillars provided to extend along the sidewalls from the bottom wall and regularly arranged at a specified interval, each of the pillars including a curved outer surface, the sidewalls partially including a curved surface conforming to the outer surface of each of the pillars, the shortest distance between the sidewalls and the pillars positioned closest to the sidewalls being equal to the shortest distance between the pillars in a flow direction of the mobile phase, the column being configured to separate individual components from a mixture sample containing multiple kinds of components by using the pillars as a stationary phase, the mixture sample being moved by the mobile phase, the method including:
preparing a substantially flat etching target member and masking areas of the etching target member corresponding to contours of the pillars and the sidewalls; and etching the etching target member thus masked and forming the flow path between the pillars and between the pillars and the sidewalls.

With the method for producing the column for chromatography, it is possible to accurately and efficiently produce a column for chromatography having an increased resolution.

In accordance with still another aspect of the present invention, there is provided a column for chromatography including a flow path for allowing a mobile phase to flow therethrough, the flow path having a pair of mutually-opposing sidewalls and a bottom wall joined to the sidewalls and arranged at bottom ends of the sidewalls, and a plurality of pillars provided to extend along the sidewalls from the bottom wall and regularly arranged at a specified interval, each of the pillars including a curved outer surface, the sidewalls partially including a curved surface conforming to the outer surface of each of the pillars, the shortest distance between the sidewalls and the pillars positioned closest to the sidewalls being equal to the shortest distance between the pillars in a flow direction of the mobile phase, the column being configured to separate individual components from a mixture sample containing multiple kinds of components by using the pillars as a stationary phase, the mixture sample being moved by the mobile phase; a pump arranged at an upstream side of the flow path and configured to introduce the mobile phase and the mixture sample into the flow path; and a detecting unit arranged at a downstream side of the flow path and configured to detect the individual components separated by the column for chromatography.

With the analysis device, it is possible to enhance the accuracy of analysis.

With the present column for chromatography, the interval between the pillars adjoining each other in the central region of the flow path is set equal to the interval between the pillars and the sidewalls in the region of the flow path close to the sidewall. In the moving direction of the mobile phase flowing through the flow path, it is possible to reduce the difference between the moving velocity in the central region and the moving velocity in the peripheral regions close to the sidewalls. That is to say, it is possible to reduce the difference between the moving velocities in the respective regions. In this case, the outer surface of each of the pillars includes a curved surface and each of the sidewalls partially includes a curved surface conforming to the outer surface of each of the pillars. This makes it possible to keep the flow of the mobile phase smooth in the regions close to the sidewall. Accordingly, the column for chromatography of this configuration is capable of reducing the influence of flow path diffusion when separating the individual components from the mixture sample and is capable of increasing the resolution.

With the present method for producing the column for chromatography, it is possible to accurately and efficiently produce a column for chromatography having an increased resolution. With the present analysis device, it is possible to enhance the accuracy of analysis.

### Brief Description of the Drawings

Fig. 1 is a view schematically showing the configuration of an analysis device according to an embodiment of the present invention.
Fig. 2 is an enlarged photograph depicting a portion of the external appearance of a flow path in a column according to the present embodiment.
Fig. 3 is an enlarged photograph of the portion designated by III in Fig. 2.
Fig. 4 is a schematic section view showing the external shape of the column according to the present embodiment.
Fig. 5 is a schematic section view showing a portion of a flow path in the column according to the present embodiment.
Fig. 6 is an enlarged view of the portion designated by VI in Fig. 5.
Fig. 7 is an enlarged view of the portion designated by VII in Fig. 6.
Fig. 8 is a view showing the configuration of a flow path of a first column in a conventional example.
Fig. 9 is an enlarged view of the portion designated by IX in Fig. 8.
Fig. 10 is a view showing the configuration of a flow path of a second column in the conventional example.
Fig. 11 is an enlarged view of the portion designated by XI in Fig. 10.
Fig. 12 is an analytical view showing a flow direction distribution status of a mixture sample after the lapse of a specified time in the first column in the conventional example.
Fig. 13 is an analytical view showing a flow direction distribution status of a mixture sample after the lapse of a specified time in the second column in the conventional example.
Fig. 14 is an analytical view showing a flow direction distribution status of a mixture sample after the lapse of a specified time in the column according to the present embodiment.
Fig. 15 is an analytical view showing a flow direction distribution status of a mixture sample after the lapse of a specified time in a column in which the interval between the pillars is set equal to 2 µmand the interval between the pillars and the sidewalls is set equal to 1 µm.
Fig. 16 is an analytical view showing a flow direction distribution status of a mixture sample after the lapse of a specified time in a column in which the interval between the pillars is set equal to 2 µm and the interval between the pillars and the sidewalls is set equal to 3 µm.
Fig. 17 is an analytical view showing a flow direction distribution status of a mixture sample after the lapse of a specified time in a column in which the interval between the pillars is set equal to 2 µm and the interval between the pillars and the sidewalls is set equal to 4 µm.
Fig. 18 is a graph representing the analysis results in the respective columns when the concentrations are detected by a detector.
Fig. 19 shows an analysis result when the interval between the pillars and the interval between the pillars and the sidewalls are set equal to 1 µm.
Fig. 20 shows an analysis result when the interval between the pillars and the interval between the pillars and the sidewalls are set equal to 3 µm.
Fig. 21 shows an analysis result when the interval between the pillars and the interval between the pillars and the sidewalls are set equal to 4 µm.
Fig. 22 is a schematic section view showing a portion of a flow path in a column according to another embodiment of the present invention, in which case the pillars have a transversely-elongated elliptical shape.
Fig. 23 is a schematic section view showing a portion of a flow path in a column according to a further embodiment of the present invention, in which case the pillars have an elliptical shape elongated in the flow direction.

### Detailed Description of the Preferred Embodiments

Embodiments of the present invention will now be described with reference to the accompanying drawings which form a part hereof. First, description will be made on the configuration of an analysis device in accordance with one embodiment of the present invention. Fig. 1 is a view schematically showing the configuration of an analysis device in accordance with the present embodiment.

Referring to Fig. 1, the analysis device 11 in accordance with the present invention makes a mixture sample containing different kinds of components pass through a column for chromatography to separate the respective components of the mixture sample by using the principle of chromatography, detects the separated components and analyzes the detected components. The analysis device 11 is used in analyzing individual components of a mixture sample, e.g., a biological fluid containing different kinds of proteins.

The analysis device 11 includes a column 13 for chromatography having a flow path 12 extending substantially straightforward in one direction and capable of allowing a mobile phase and a mixture sample to flow therethrough, the column 13 configured to separate different kinds of components of the mixture sample which can be moved by the mobile phase, a pump 14 for introducing the mobile phase and the mixture sample into the column 13, a detector 15 for detecting the respective components of the mixture sample separated by the column 13, and a computer 16 for controlling the operation of the detector 15.

The pump 14 is arranged at the upstream side of the flow path 12. The pump 14 and the column 13 are connected to each other by a pipe 20. The pump 14 introduces the mobile phase and the mixture sample into the column 13 through the pipe 20 at the upstream side, i.e., at one end portion of the flow path 12. The detector 15 is arranged at the downstream side of the flow path 12. The detector 15 and the column 13 are connected to each other by a pipe 21. After the respective components are separated by the column 13, the mixture sample is discharged from the column 13 at the downstream side, i.e., at the other end portion of the flow path 12. Then, the respective components are introduced into the detector 15 through the pipe 21. The detector 15 performs detection of the respective components thus introduced, namely detection to identify the kinds of the respective components. The detector 15 is provided with a pipe 22 through which the mobile phase including the respective components detected is discharged from the detector 15, namely the analysis device 11. The flow rate and the flow velocity of the mobile phase are appropriately selected depending on the required performance and resolution of the column 13, the kinds of the components contained in the mixture sample and the quantity of the mixture sample. For example, a liquid is used as the mobile phase.

The column 13 includes a substantially flat base portion 17 and a substantially flat cover portion 18 covering the entirety of the base portion 17. The flow path 12 is formed on one surface 19 of the base portion 17 in a depressed state. The flow path 12 extends from the left side toward the right side in Fig. 1. The flow path 12 is configured to allow the mobile phase and the mixture sample to flow therethrough. That is to say, the left side of the flow path 12 in Fig. 1 becomes the upstream side and the right side of the flow path 12 in Fig. 1 becomes the downstream side.

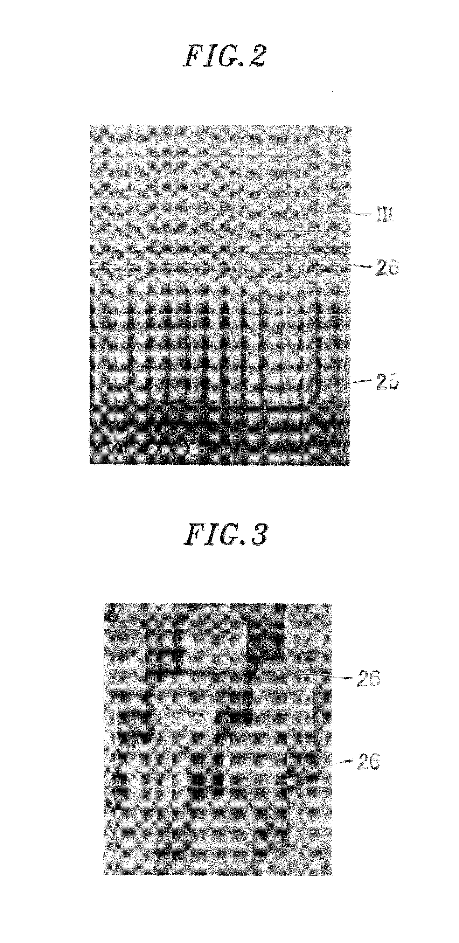

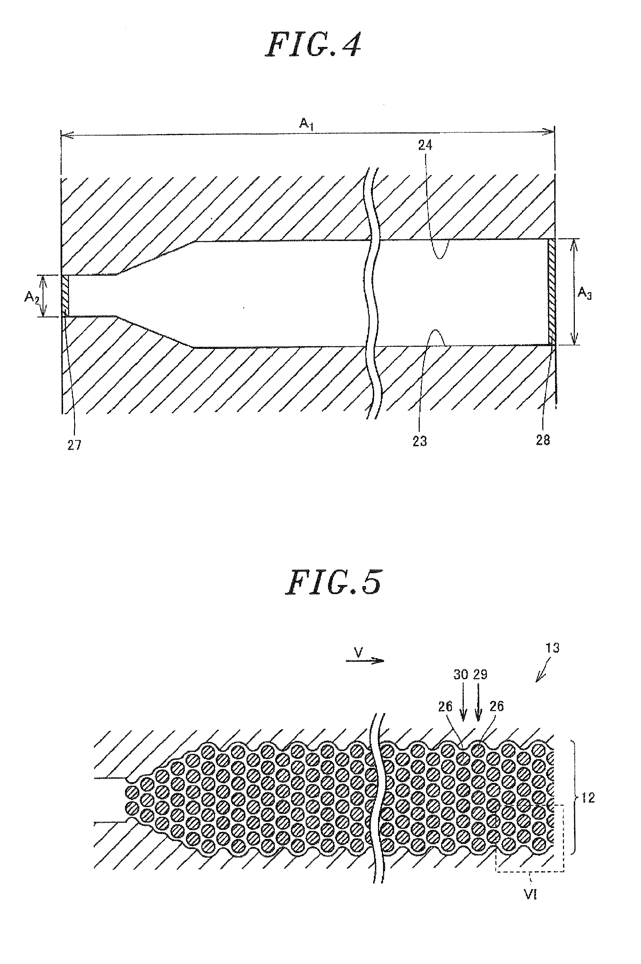

Fig. 2 is an enlarged photograph depicting a portion of the external appearance of the column 13 in accordance with the present embodiment. Fig. 3 is an enlarged photograph of the portion designated by III in Fig. 2. Fig. 4 is a schematic section view showing the external shape of the column 13 in accordance with the present embodiment. Fig. 4 is a section view of the column 13 taken along a plane orthogonal to the extension direction of pillars 26.

Referring to Figs. 1 through 4, the flow path 12 includes a pair of mutually-opposing sidewalls 23 and 24 and a bottom wall 25 arranged at the bottom side of the sidewalls 23 and 24. For the sake of easier understanding, the sidewalls 23 and 24 are shown in Fig. 4 as if they extend straightforward in the left-right direction. However, more precisely, the sidewalls 23 and 24 have a shape as shown in Figs. 5 through 7. Description will be made later on the specific shape of the sidewalls 23 and 24.

A plurality of pillars 26 having a cylindrical columnar shape extends from the bottom wall 25 of the flow path 12. The pillars 26 are provided to extend upward from the bottom wall 25, namely to extend straightforward in the upper direction of the drawing sheet in Fig. 2. The tip ends of the cylindrical columnar pillars 26 are configured to make contact with the lower surface of the cover portion 18 when the cover portion 18 is arranged on the base portion 17. In other words, the region between the pillars 26 in the space surrounded by the sidewalls 23 and 24, the bottom wall 25 and the cover portion 18 when the cover portion 18 is arranged on the base portion 17, becomes the flow path 12 through which the mobile phase and the mixture sample flow. The surfaces of the pillars 26, i.e., the outer surfaces of the pillars 26, are formed of curved surfaces and are configured so that so-called chemical modification can be applied thereto. The pillars 26 become a stationary phase for chromatography. Description will be made later on the specific arrangement of the pillars 26.

The sidewalls 23 and 24 are shaped to extend upward along the extension direction of the pillars 26. The size of an inlet 27 as an upstream end portion of the flow path 12 for introduction of the mobile phase and the mixture sample, specifically the width of the inlet 27 along the up-down direction in Fig. 4, is smaller than the width of an outlet 28 along the up-down direction as a downstream end portion for discharge of the components of the sample which are separated from each other. The sidewalls 23 and 24 are configured to extend straightforward from the inlet 27 along the moving direction and then extend in a taper shape so that the width thereof can be made larger. This configuration makes it possible to efficiently divide the mixture sample within the flow path 12.

Specific dimensions of the flow path 12 are as follows. The length from the inlet 27 to the outlet 28, i.e., the dimension A₁ in Fig. 4 as a so-called column length, is about 300 µm. The width of the inlet 27, i.e., the dimension A₂ in Fig. 4, is about 20 µm. The width of the outlet 28, i.e., the dimension A₃ in Fig. 4, is about 50 µm. The column 13 in accordance with the present embodiment is of such a scale, namely a micrometer order. As can be seen if Fig. 4, the column 13 is elongated in the left-right direction, i.e., in the horizontal direction.

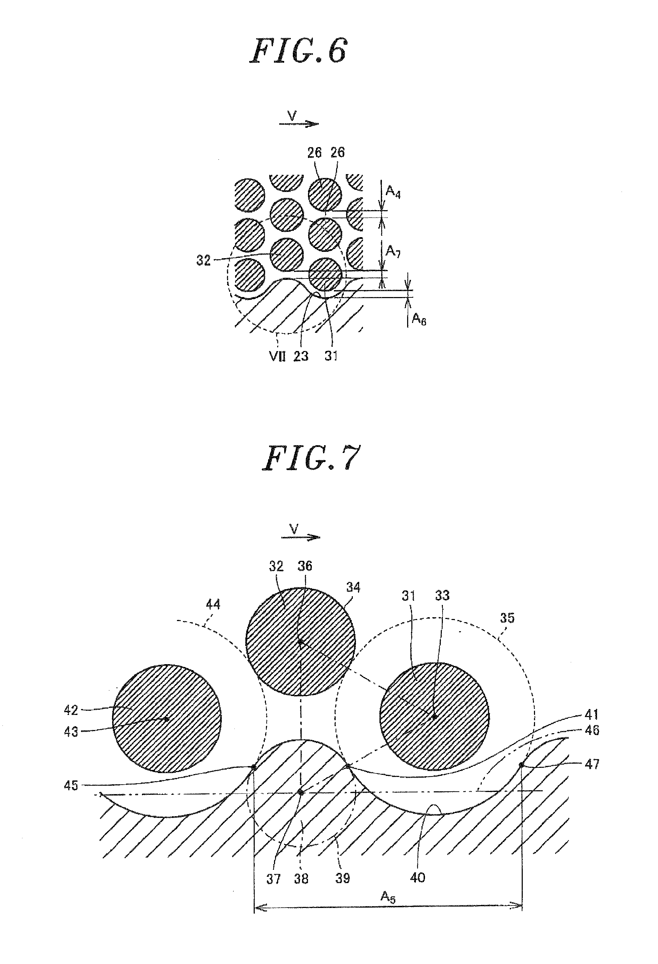

Next, description will be made on the specific configuration of the column 13. Fig. 5 is a schematic section view showing a portion of the column 13 in accordance with the present embodiment. Fig. 6 is an enlarged view of the portion designated by VI in Fig. 5. Fig. 7 is an enlarged view of the portion designated by VII in Fig. 6. Figs. 5 through 7 show the cross section of the column 13 taken along the plane orthogonal to the extension direction of the pillars 26. The longitudinal direction refers to the column length direction which indicates the left-right direction of the drawing sheet in Figs. 5 through 7. The transverse direction refers to the column width direction which indicates the up-down direction of the drawing sheet in Figs. 5 through 7. The moving direction of the mobile phase and the mixture sample is indicated by an arrow V in Figs. 5 through 7.

The specific arrangement of the pillars 26 will be first described with reference to Figs. 5 through 7. Referring to Figs. 5 through 7, the cylindrical columnar pillars 26 have a circular contour line. The pillars 26 are regularly arranged at a specified interval such that the center coordinates of the pillars 26 are arranged in a closest packing structure. In other words, the pillars 26 are arranged such that the shortest distance between the pillars 26 adjoining each other remains uniform. In the present embodiment, first rows 29 each including seven pillars 26 arranged side by side in the transverse direction and second rows 30 each including six pillars 26 arranged side by side in the transverse direction are alternately arranged along the longitudinal direction. In the cross section shown in Fig. 5, the shape of straight lines interconnecting the centers of three adjoining pillars 26 arranged in the first and second rows 29 and 30 becomes a regular triangle shape. In the present embodiment, the shortest distance A₄ between the pillars 26 in Fig. 6 corresponds to the above specified interval, e.g., 2 µm. The region between the pillars 26 through which the mobile phase and the mixture sample are moved will be referred to as central region. The region between the pillars 26 and the sidewalls 23 and 24 through which the mobile phase and the mixture sample are moved will be referred to as peripheral region.

Next, description will be made on the specific shape of one of the sidewalls 23 and 24 defining the flow path 12. Among the pillars 26 arranged at the specified interval, the pillar positioned closest to the sidewall 23 in each of the first rows 29 will be referred to as first pillar 31 and the pillar positioned closest to the sidewall 23 in each of the second rows 30 will be referred to as second pillar 32. The first and second pillars 31 and 32 are deviated from each other in the moving direction and are arranged to adjoin each other. In the transverse direction, the first pillar 31 is arranged more outwardly than the second pillar 32, namely farther than the second pillar 32 from the transverse center of the flow path 12.

An imaginary circle making contact with the contour line 34 of the second pillar 32 is drawn about the center 33 of the first pillar 31. In Fig. 7, the imaginary circle has a contour line 35 indicated by a dot line. An imaginary pillar 38 is drawn to have a center 37 positioned such that the lines interconnecting the center 37 of the imaginary pillar 38 and the centers 33 and 36 of the first and second pillars 31 and 32 make a regular triangle and to have a diameter equal to the diameter of the pillars 26. The imaginary pillar 38 has a contour line 39 indicated by a single-dot chain line. The regular triangle formed by interconnecting the respective centers 33, 36 and 37 is also indicated by a single-dot chain line. If it is assumed that the sidewall 23 does not exist, the imaginary pillar 38 would become one of the pillars formed in the flow path in an arrangement pattern of the closest packing structure. The contour lines 35 and 39 are all formed into an arc shape.

In this regard, the sidewall 23 is formed into such a shape that, in the cross section stated above, e.g., in the cross section shown in Fig. 7, concave and convex sections are repeatedly arranged along the flow direction of the mobile phase. Each of the concave and convex sections is defined by a line including a portion of the contour line 35 of the imaginary circle and a portion of the contour line 39 of the imaginary pillar 38. The line defining the sidewall 23 is indicated by a thick solid line 40 in Fig. 7.

More specifically, the line defining the sidewall 23 is formed of a portion of the contour line 39 of the imaginary pillar 38 in the segment close to the second pillar 32, namely in the longitudinal segment extending from the intersection point 41 between the contour line 35 of the imaginary circle and the contour line 39 of the imaginary pillar 38 to the intersection point 45 between the contour line 44 of an imaginary circle drawn about the center 43 of a third pillar 42 adjoining the second pillar 32 in the moving direction and making contact with the contour line 34 of the second pillar 32 and the contour line 39 of the imaginary pillar 38. The sidewall 23 is formed of a curved surface conforming to the outer surface of the first pillar 31 in the region close to the first pillar 31, namely in the longitudinal region extending from the intersection point 41 to the intersection point 47. The line defining the sidewall 23 is formed of a line conforming to the contour line 35 of the imaginary circle in the region lying close to the first pillar 31 at the downstream side of the intersection point 41. The line defining the sidewall 23 is formed of a line conforming to the contour line 44 of the imaginary circle in the region lying close to the third pillar 42 at the upstream side of the intersection point 41. The line extending straightforward in the longitudinal direction through the center 37 of the imaginary pillar 38 will be referred to as a reference line 46 indicated by a double dot chain line in Fig. 7. In the cross section shown in Fig. 7, the line defining the sidewall 23 is formed into such a shape that concave and convex sections are repeatedly arranged with respect to the reference line 46, namely such a shape that sections protruding from the reference line 46 toward the center of the flow path 12, i.e., toward the upper side of the drawing sheet in Fig. 7, and sections depressed away from the center of the flow path 12, i.e., from the reference line 46 toward the lower side of the drawing sheet in Fig. 7, are repeatedly arranged along the longitudinal direction. The unit of the repeated sidewall sections is formed of the longitudinal region A₅ extending from the intersection point 47 between the contour line 35 of the imaginary circle and the contour line of an imaginary pillar (not shown) drawn in the same manner as described above to the intersection point 45. The sidewall section formed in the longitudinal region is repeated in conformity with the number of the pillars 26.

In the present embodiment, the shortest distance between the first pillar 31 and the sidewall 23 indicated by the dimension A₆ in Fig. 6 and the shortest distance between the second pillar 32 and the sidewall 23 indicated by dimension A₇ in Fig. 6 are equal to 2 µm. As shown in Fig. 5, the taper-shaped region of the sidewall 23 is formed into the same shape as set forth above.

The shape of the other sidewall 24 is the same as the shape of one of the sidewall 23 described above. Therefore, no description will be made on the shape of the other sidewall 24.

With the column 13 of this configuration, the interval between the pillars 26 adjoining each other in the central region of the flow path 12 is set equal to the interval between the first and second pillars 31 and 32 and the sidewall 23 in the region of the flow path 12 close to the sidewall 23. In the moving direction of the mobile phase flowing through the flow path 12, it is possible to reduce the difference between the moving velocity in the central region and the moving velocity in the peripheral regions close to the sidewall 23. That is to say, it is possible to reduce the difference between the moving velocities in the respective regions. In this case, the outer surface of each of the pillars 26 includes a curved surface and the sidewall 23 partially includes a curved surface conforming to the outer surface of each of the pillars 26. This makes it possible to keep the flow of the mobile phase smooth in the regions close to the sidewall 23. Accordingly, the column 13 of this configuration is capable of reducing the influence of flow path diffusion when separating the individual components from the mixture sample and is capable of increasing the resolution.

In this case, the sidewall 23 can be formed of an arc-shaped line. This makes it possible to efficiently restrain the mobile phase from staying in the peripheral regions and to assure smooth movement of the mobile phase within the flow path.

Next, description will be made on one example of a method for producing the column having the shape described above. First, a substantially flat base portion made of a material such as silicon (Si) is prepared. On one major surface, i.e., one thickness direction surface, of the base portion, masking is performed with respect to the areas which will become pillars and sidewalls later. That is to say, masking is performed on the areas corresponding to the contours of the pillars and the sidewalls. In this case, it is possible to use, e.g., a photolithography technology used in manufacturing a semiconductor device or the like. Thereafter, etching is performed until the area other than the masked areas is etched to the portion corresponding to the bottom wall, while keeping the masked areas intact. In other words, etching is performed with respect to an etching target member, thereby forming a flow path between the pillars and between the pillars and the sidewalls. In this manner, the flow path is formed and the column in accordance with the present embodiment is produced.

With this production method, it is possible to accurately and efficiently produce a column for chromatography having an increased resolution. In particular, the minute structure of the column having the scale stated above, namely the shape of the pillars and the sidewalls, can be faithfully reproduced in an accurate and efficient manner.

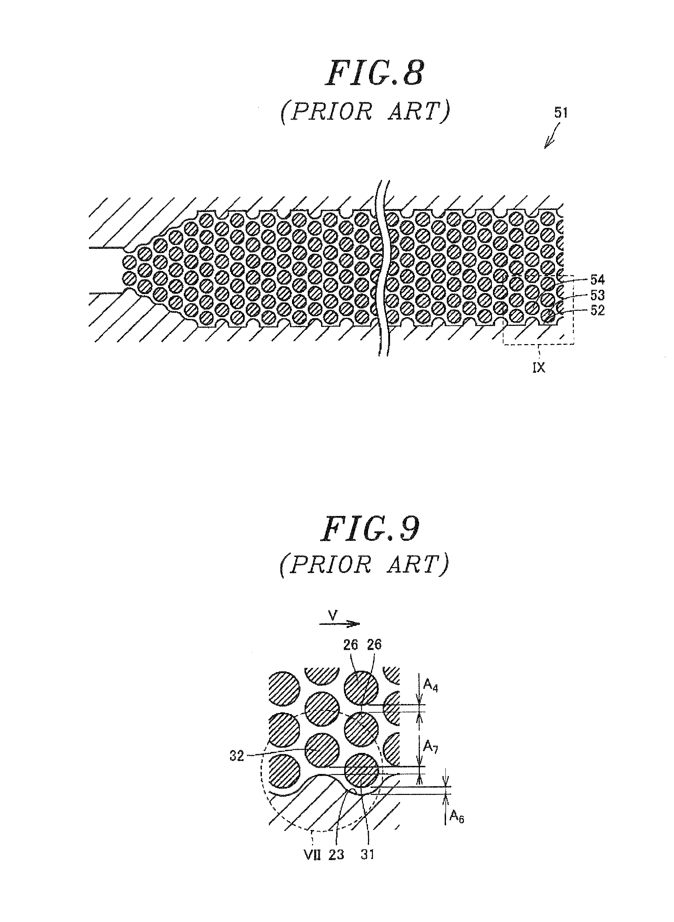

Next, description will be made on the difference between the column in accordance with the present embodiment and the column in the conventional example. Fig. 8 is a view showing the configuration of a flow path of a first column in the conventional example. Fig. 9 is an enlarged view of the portion designated by IX in Fig. 8. Fig. 8 corresponds to Fig. 5. Fig. 9 corresponds to Fig. 6. Figs. 8 and 9 shows a flow path model disclosed in Figure 1(b) of Analytical Chemistry, Vol. 76, No. 15, August 1, 2004. More specifically, the first column 51 in the conventional example is configured to include semi-cylindrical pillars arranged along the sidewall 52. The transverse dimension B₁, i.e., the shortest distance between the pillar 53 as a first pillar and the sidewall 52 in Fig. 9, is equal to 1 µm. The transverse dimension B₂, i.e., the shortest distance between the pillar 54 as a second pillar and the sidewall 52 in Fig. 9, is equal to 2 µm. The shortest distance between the pillars is equal to 2 µm.

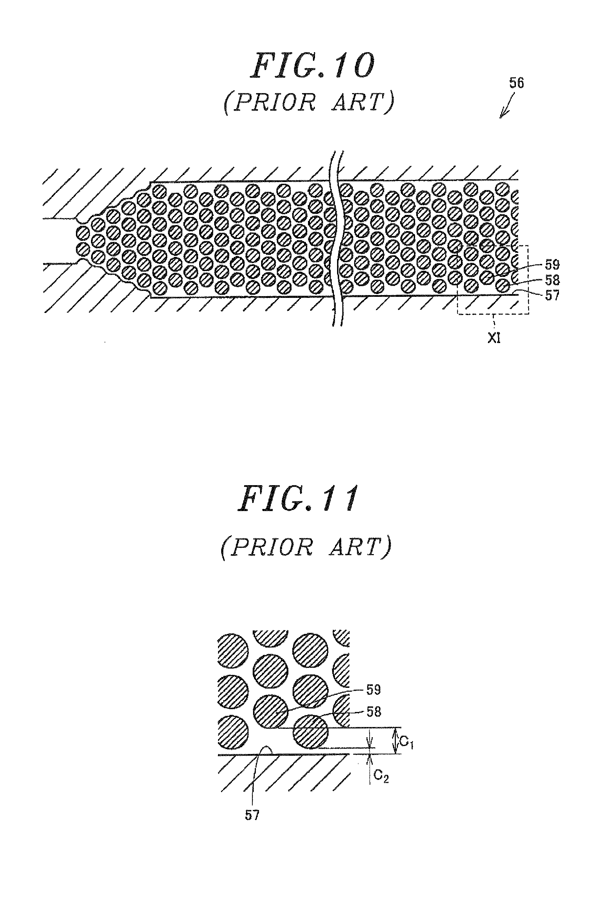

Fig. 10 is a view showing the configuration of a flow path of a second column in the conventional example. Fig. 11 is an enlarged view of the portion designated by XI in Fig. 10. Fig. 10 corresponds to Fig. 5. Fig. 11 corresponds to Fig. 6. Figs. 10 and 11 shows a flow path model disclosed in Figure 1(c) of the non-patent document 1. More specifically, the second column 56 in the conventional example is configured to include a sidewall extending straightforward in the longitudinal direction. The transverse dimension C₁, i.e., the shortest distance between the pillar 58 as a first pillar and the sidewall 57 in Fig. 11, is equal to 1 µm. The transverse dimension C₂, i.e., the shortest distance between the pillar 59 as a second pillar and the sidewall 52 in Fig. 11, is equal to 4 µm. The shortest distance between the pillars is equal to 2 µm.

The flow path 12 of the column 13 in accordance with the present embodiment has the configuration as shown in Figs. 5 through 7. The transverse dimension between the first pillar 31 and the sidewall 23 and the transverse dimension between the second pillar 32 and the sidewall 23 are equal to 2 µm. The shortest distance between the pillars 26 is also equal to 2 µm.

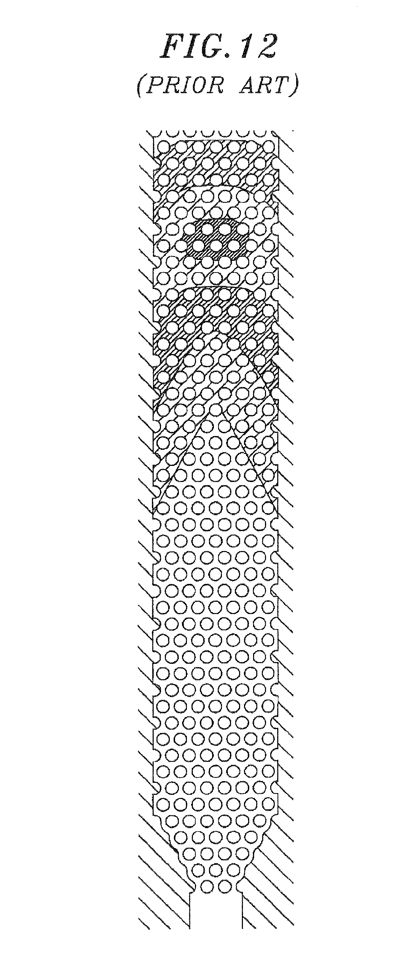

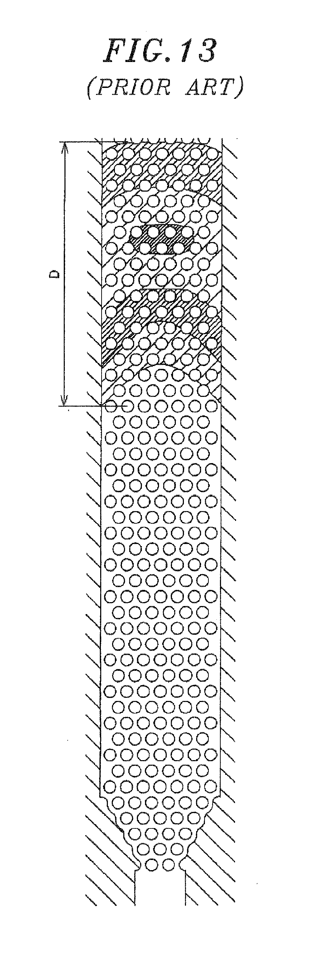

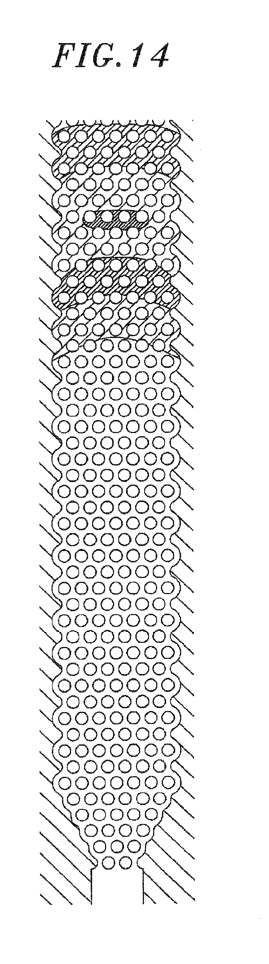

Fig. 12 is an analytical view showing a flow direction distribution status of a mixture sample after the lapse of a specified time in the first column 51 in the conventional example. Fig. 13 is an analytical view showing a flow direction distribution status of a mixture sample after the lapse of a specified time in the second column 56 in the conventional example. Fig. 14 is an analytical view showing a flow direction distribution status of a mixture sample after the lapse of a specified time in the column 13 in accordance with the present embodiment. In this regard, the input conditions for analysis are as follows. The diameter of the pillars is 5 µm. The flow rate is 52266 µm³/sec. The diffusion coefficient is 500 µm²/sec. The concentration of solution is 20 µM (Mol). The Courant number (C) is set smaller than 0.5, satisfying an inequality of C<0.5. The term "Courant number" used herein is an index for deciding a time unit in analysis and also an index indicating the stability of analysis results. In general, the reliability of analysis results is enhanced if the analysis is conducted under the condition of C<1.

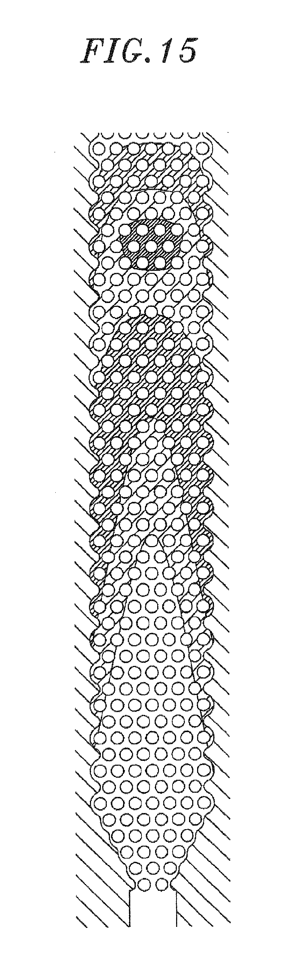

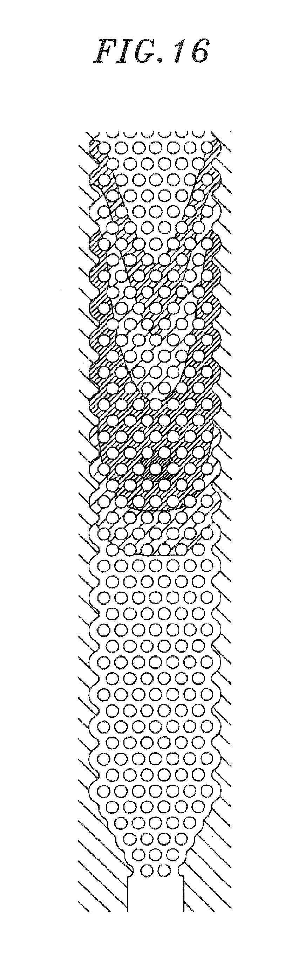

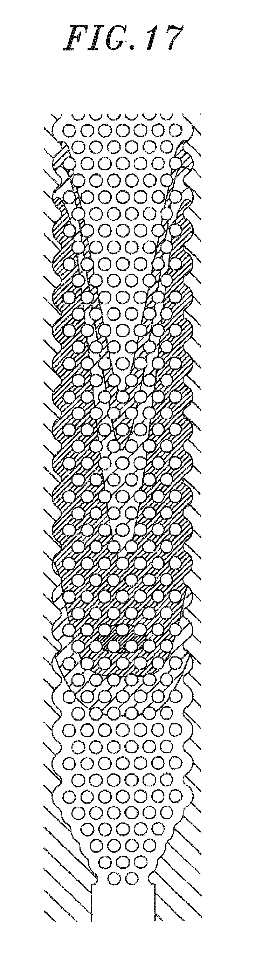

As comparative examples, analysis was conducted with respect to the columns in which the interval between the pillars and the interval between the pillars and the sidewalls are differently set. Fig. 15 is an analytical view showing a flow direction distribution status of a mixture sample after the lapse of a specified time in a column in which the interval between the pillars is set equal to 2 µm and the interval between the pillars and the sidewalls is set equal to 1 µm. Fig. 16 is an analytical view showing a flow direction distribution status of a mixture sample after the lapse of a specified time in a column in which the interval between the pillars is set equal to 2 µm and the interval between the pillars and the sidewalls is set equal to 3 µm. Fig. 17 is an analytical view showing a flow direction distribution status of a mixture sample after the lapse of a specified time in a column in which the interval between the pillars is set equal to 2 µm and the interval between the pillars and the sidewalls is set equal to 4 µm. In Figs. 12 through 17, the same component of the mixture sample is indicated by the same hatching. The borders between the individual components are indicated by solid lines for the sake of easier understanding, although the borders are not clear in reality.

Referring to Figs. 12 through 17, the analysis result shown in Fig. 12 and the analysis result shown in Fig. 13 reveal that the moving velocity in the peripheral regions, i.e., in the regions close to the sidewalls, is smaller than the moving velocity in the central region. In the first and second columns 51 and 56 in the conventional example, the mixture sample is moved in such a pattern that the moving direction distribution of the same component has a substantially wide V-like shape. With the analysis result shown in Fig. 15, just like the analysis results shown in Figs. 12 and 13, the mixture sample is moved in such a pattern that the moving direction distribution of the same component has a substantially wide V-like shape. The analysis results shown in Figs. 16 and 17 reveal that the moving velocity in the regions close to the sidewalls is larger than the moving velocity in the central region. The moving direction distribution of the same component has a substantially V-like shape inverted from those shown in Figs. 12, 13 and 15. In the analysis results shown in Figs. 12, 23, 15, 16 and 17, the width of the same component along the moving direction is wide.

In contrast, the analysis result shown in Fig. 14 reveals that the moving velocity in the peripheral regions and the moving velocity in the central region are kept substantially uniform and further that the width of the same component along the moving direction is narrow. In the column 13 in accordance with the present embodiment, the velocity in the peripheral regions and the moving velocity in the central region along the moving direction are substantially equal to each other and the velocity difference is very small.

Now, consideration is given to a theoretical stage height. The theoretical stage height is calculated by an equation: theoretical stage height (H) = σ² (band width)/column length (A₁). The theoretical stage height is one index indicating the resolution of the column. It can be said that the resolution becomes superior as the value of the theoretical stage height grows smaller. The band width is calculated from the flow direction position of the separated component moving fastest and the flow direction position of the separated component moving slowest. The band width thus calculated is usually 4σ which is used in calculating the theoretical stage height. In Fig. 13, the band width (4σ) is indicted by dimension D.

The values of the theoretical stage height in the respective columns are shown in Table 1. The column length used in the calculation is the dimension A1 in Fig. 4, specifically 295 µm.

**[Table 1]**

| Column Model | Band Width (4σ) | Theoretical Stage Height (H) |
|---|---|---|
| Type shown in Fig. 9 | 145.44 µm | 4.49 µm |
| Type shown in Fig. 11 | 109.08 µm | 2.52 µm |
| Type shown in Fig. 6 | 90.90 µm | 1.75 µm |

Referring to Table 1, the theoretical stage height of the first column 51 in the conventional example is equal to 4.49 µm and the theoretical stage height of the second column 56 in the conventional example is equal to 2.52 µm. In contrast, the theoretical stage height of the column 13 in accordance with the present embodiment is equal to 1.75 µm which is quite smaller than the value of the theoretical stage height of the first and second columns 51 and 56 in the conventional example. From this result, it is possible to grasp the level of the resolution of the column 13 in accordance with the present embodiment.

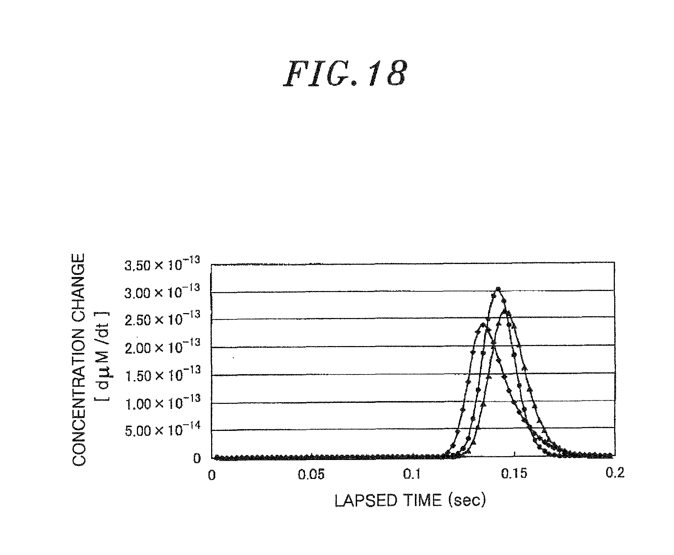

Fig. 18 is a graph representing the analysis results in the respective columns analyzed in Figs. 12 through 14, when the concentrations are detected by a detector. In Fig. 18, the horizontal axis designates a lapsed time (seconds) and the vertical axis designates a concentration change (dµM/dt). The lapsed time denotes the time lapsed from the measurement start time, i.e., the time when the mixture sample is introduced into the inlet.

Referring to Fig. 18, in case of the first column 51 in the conventional example indicated by square marks, the concentration change occurs such that the value of concentration gets increased after the lapse of about 0.12 second. The concentration change continues to occur until the lapse of about 0.18 second. In case of the second column in the conventional example indicated by triangular marks, the concentration change occurs after the lapse of about 0.125 second. The concentration change continues to occur until the lapse of about 0.18 second.

In contrast, In case of the column in accordance with the present invention indicated by circular marks, the concentration change occurs after the lapse of about 0.125 second. The concentration change continues to occur until the lapse of about 0.17 second. The peak of the concentration change is higher in the column in accordance with the present invention than in the first and second columns in the conventional example. That is to say, the distribution of the concentration change is sharper in the column in accordance with the present invention than in the first and second columns in the conventional example. From this result, it is possible to grasp the level of the resolution of the column 13 in accordance with the present invention.

As described above, the column and the analysis device in accordance with the present invention are capable of enhancing the resolution.

While the interval between the pillars and the interval between the pillars and the sidewalls are set equal to 2 µm in the foregoing embodiment, the present invention is not limited thereto. The interval between the pillars and the interval between the pillars and the sidewalls may be arbitrarily set depending on the required performance of the column and the kind of the individual components of the mixture sample. Under the input conditions for analysis in which the diameter of the pillars is 5 µm, it is preferred that the interval between the pillars and the interval between the pillars and the sidewalls be set equal to or smaller than 2 µm. This makes it possible to realize an increased resolution.

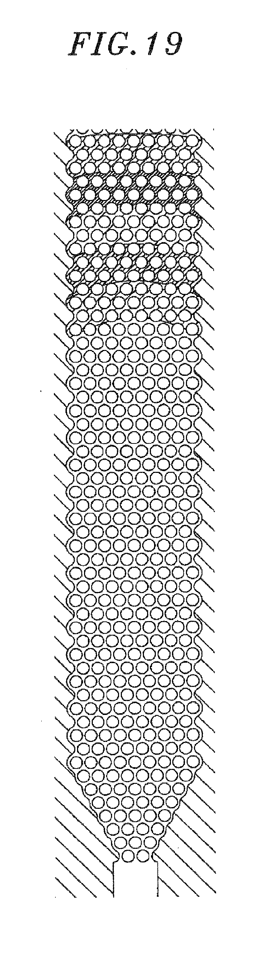

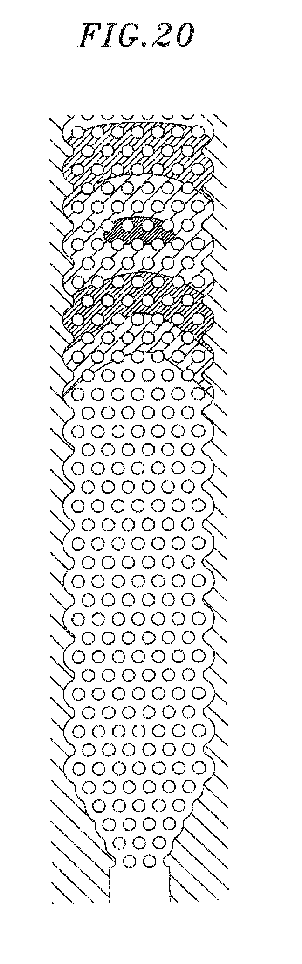

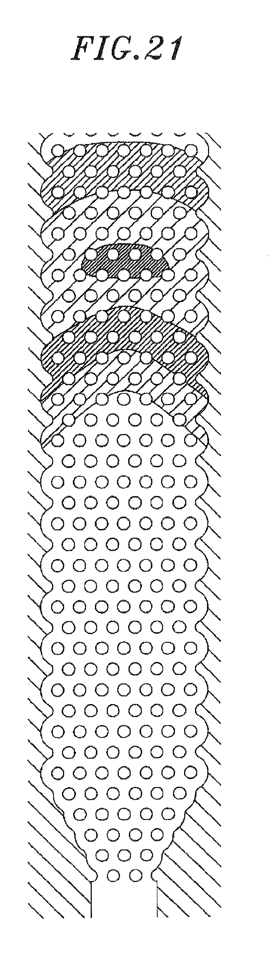

Fig. 19 shows an analysis result when the interval between the pillars and the interval between the pillars and the sidewalls are set equal to 1 µm. Fig. 20 shows an analysis result when the interval between the pillars and the interval between the pillars and the sidewalls are set equal to 3 µm. Fig. 21 shows an analysis result when the interval between the pillars and the interval between the pillars and the sidewalls are set equal to 4 µm. The input conditions for analysis are the same as those shown in Fig. 12. Referring to Figs. 19 through 21 and Fig. 14, under the input conditions for analysis set forth above, the band width tends to grow larger as the interval between the pillars and the interval between the pillars and the sidewalls are increased. In the model close to the aforementioned input conditions for analysis, it is possible to separate the components of the mixture sample with a high resolution if the interval between the pillars and the interval between the pillars and the sidewalls are set equal to or smaller than 2 µm.

While the flow path of the column is shaped to extend straightforward in the left-right direction in the foregoing embodiment, the present invention is not limited thereto. For example, the flow path may have a substantially U-like folded shape or a multiple folded S-like shape. In that case, the number of folding toward one side is preferably set equal to the number of folding toward the other side in order that, at the outlet, the moving velocity near one sidewall becomes equal to the moving velocity near the other sidewall.

While the pillars are formed into a cylindrical shape in the foregoing embodiment, the present invention is not limited thereto. For example, when seen from above, the pillars may have an elliptical shape elongated in the longitudinal direction or an elliptical shape elongated in the transverse direction. The number of the pillars can be arbitrarily selected depending on the required performance of the column and so forth.

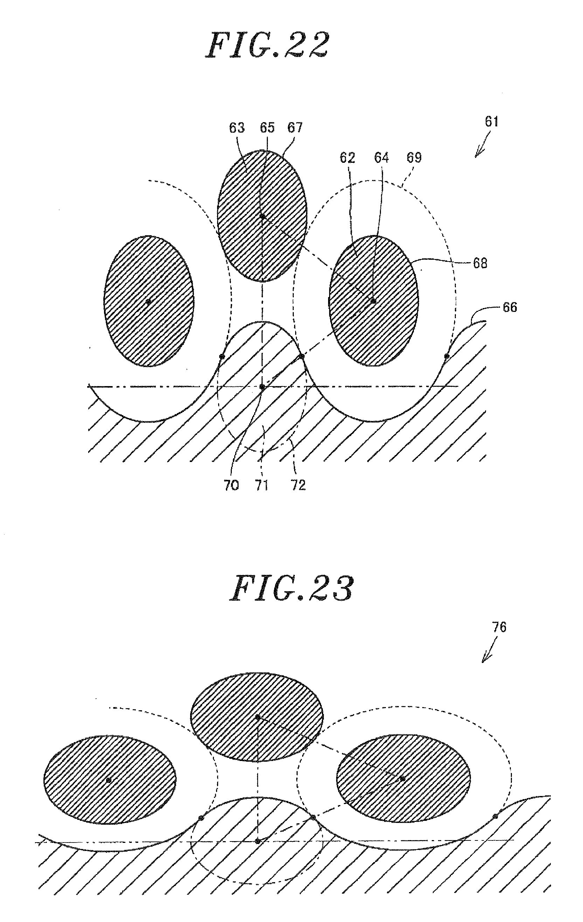

Description will now be made on the configuration of a column in which pillars have an elliptical cross-sectional shape. Fig. 22 is a schematic section view showing a portion of a flow path in a column in accordance with another embodiment of the present invention, in which case the pillars have an elliptical shape elongated in the transverse direction, namely in the up-down direction of the drawing sheet. The cross section shown in Fig. 22 corresponds to the cross section shown in Fig. 7. Referring to Fig. 22, the column 61 in accordance with another embodiment of the present invention includes first and second pillars 62 and 63 having a transversely-elongated elliptical shape when seen in a cross section taken along a plane orthogonal to the extension direction of the pillars 62 and 63. The pillars 62 and 63 have a so-called elliptical cylinder shape. The coordinates of the centers 64 and 65 of the pillars 62 and 63 are arranged in a closest packing structure. The sidewall 66 is formed into such a shape that, in the cross section stated above, concave and convex sections are repeatedly arranged along the flow direction of the mobile phase. Each of the concave and convex sections is defined by a line including a portion of a contour line 69 of an imaginary elliptical circle, which is drawn about the center 64 of the first pillar 62 closest to the sidewall 66 so as to make contact with the contour line 67 of the second pillar 63 adjoining the first pillar 62 and so as to have a shape similar to the elliptical circle of the contour line 68 of the first pillar 62, and a portion of a contour line 72 of an imaginary pillar 71, which has an arc identical with the arc of the first pillar 62 and which is positioned so as to form an isosceles triangle indicated by a single-dot chain line in Fig. 22 when the center 70 of the imaginary pillar 71 and the centers 64 and 65 of the first and second pillars 62 and 63 are connected to one another. The sidewall 66 may have such a shape. The line segment forming the bottom side of the isosceles triangle is the line segment interconnecting the centers 65 and 70.

The pillars may have an elliptical cross-sectional shape elongated in the flow direction, namely in the left-right direction of the drawing sheet. Fig. 23 is a section view showing a portion of a flow path available in that case. Referring to Fig. 23, the column 76 in accordance with a further embodiment of the present invention remains the same as the column shown in Fig. 22 except that the elliptical circle is elongated in the moving direction of the mobile phase. Therefore, no description will be made on the column 76. The column 76 may have such a shape.

While the inlet-side width of the flow path is set small and the outlet-side width of the flow path is set large in the embodiments described above, the present invention is not limited thereto. For example, the inlet-side width of the flow path may be set equal to the outlet-side width of the flow path.

In the embodiments described above, the columns of the aforementioned configuration are produced by an etching method used in a semiconductor device manufacturing technology. However, the present invention is not limited thereto. For example, the pillars and the sidewalls of the arrangement described above may be formed on a flat base portion by depositing a material on the regions corresponding to the pillars and the sidewalls through a CVD (Chemical Vapor Deposition) method. Alternatively, the columns of the aforementioned configuration may be produced by cutting a region between pillars through a fine machining method instead of a semiconductor device manufacturing technology.

While certain embodiments of the present invention have been described above with reference to the drawings, the present invention is not limited to the embodiments illustrated. The illustrated embodiments may be modified or changed in many different forms within the scope of the present invention or its equivalents.

## Claims

1. A column for chromatography, comprising:
a flow path for allowing a mobile phase to flow therethrough, the flow path including a pair of mutually-opposing sidewalls and a bottom wall joined to the sidewalls and arranged at bottom ends of the sidewalls; and
a plurality of pillars provided to extend along the sidewalls from the bottom wall and regularly arranged at a specified interval,
wherein the column is configured to separate individual components from a mixture sample containing multiple kinds of components by using the pillars as a stationary phase, the mixture sample being moved by the mobile phase,
each of the pillars includes a curved outer surface, the sidewalls partially including a curved surface conforming to the outer surface of each of the pillars, and
the shortest distance between each of the sidewalls and a pillar positioned closest to said each of the sidewalls is equal to the shortest distance between the pillars in a flow direction of the mobile phase.

2. The column of claim 1, wherein the pillars have a cylindrical shape, the pillars having center coordinates arranged in a closest packing structure in a cross section orthogonal to an extension direction of the pillars, each of the sidewalls being formed into such a shape that, in the cross section, concave and convex sections are repeatedly arranged along the flow direction of the mobile phase, each of the concave and convex sections being defined by a line including a portion of a contour line of an imaginary circle, which is drawn about a center of a first pillar positioned closest to each of the sidewalls so as to make contact with a contour line of a second pillar adjoining the first pillar, and a portion of a contour line of an imaginary pillar, which has a diameter equal to a diameter of the pillars and which is positioned so as to form a regular triangle when the center of the imaginary pillar and the centers of the first and second pillars are connected to one another.

3. The column of claim 1, wherein the pillars have an elliptical shape in a cross section taken along a plane orthogonal to an extension direction of the pillars, the pillars having center coordinates arranged in a closest packing structure, each of the sidewalls being formed into such a shape that, in the cross section, concave and convex sections are repeatedly arranged along the flow direction of the mobile phase, each of the concave and convex sections being defined by a line including a portion of a contour line of an imaginary elliptical circle, which is drawn about a center of a first pillar positioned closest to each of the sidewalls so as to make contact with a contour line of a second pillar adjoining the first pillar and so as to have a shape similar to the imaginary elliptical circle, and a portion of a contour line of an imaginary pillar, which has an arc identical with an arc of the first pillar and which is positioned so as to form an isosceles triangle when the center of the imaginary pillar and the centers of the first and second pillars are connected to one another.

4. A method for manufacturing a column for chromatography including a flow path for allowing a mobile phase to flow therethrough, the flow path having a pair of mutually-opposing sidewalls and a bottom wall joined to the sidewalls and arranged at bottom ends of the sidewalls, and a plurality of pillars provided to extend along the sidewalls from the bottom wall and regularly arranged at a specified interval, each of the pillars including a curved outer surface, the sidewalls partially including a curved surface conforming to the outer surface of each of the pillars, the shortest distance between the sidewalls and the pillars positioned closest to the sidewalls being equal to the shortest distance between the pillars in a flow direction of the mobile phase, the column being configured to separate individual components from a mixture sample containing multiple kinds of components by using the pillars as a stationary phase, the mixture sample being moved by the mobile phase, the method comprising:
preparing a substantially flat etching target member and masking areas of the etching target member corresponding to contours of the pillars and the sidewalls; and
etching the etching target member thus masked and forming the flow path between the pillars and between the pillars and the sidewalls.

5. An analysis device, comprising:
a column for chromatography including a flow path for allowing a mobile phase to flow therethrough, the flow path having a pair of mutually-opposing sidewalls and a bottom wall joined to the sidewalls and arranged at bottom ends of the sidewalls, and a plurality of pillars provided to extend along the sidewalls from the bottom wall and regularly arranged at a specified interval, each of the pillars including a curved outer surface, the sidewalls partially including a curved surface conforming to the outer surface of each of the pillars, the shortest distance between the sidewalls and the pillars positioned closest to the sidewalls being equal to the shortest distance between the pillars in a flow direction of the mobile phase, the column being configured to separate individual components from a mixture sample containing multiple kinds of components by using the pillars as a stationary phase, the mixture sample being moved by the mobile phase;
a pump arranged at an upstream side of the flow path and configured to introduce the mobile phase and the mixture sample into the flow path; and
a detecting unit arranged at a downstream side of the flow path and configured to detect the individual components separated by the column for chromatography.
